# EUROPÄISCHE PATENTSCHRIFT

(11) **EP 1 524 022 B1**
(45) Veröffentlichungstag und Bekanntmachung des Hinweises auf die Patenterteilung: **21.02.2007**
(21) Anmeldenummer: 04030092.3
(22) Anmeldetag: 18.07.2003
(51) Int. Cl.: B01D 29/66, B01D 35/12, B29C 47/68

(54) **Vorrichtung zum Filtrieren eines Fluids, insbesondere für kunststoffverarbeitende Anlagen**
Device for filtering a liquid, especially for plastics processing plants
Dispositif de filtration de liquide, notamment pour des installations de transformation de matières plastiques

(30) Priorität: 17.09.2002 DE 10242993; 20.11.2002 DE 10254022; 27.02.2003 DE 10308429; 15.04.2003 DE 10317170
(43) Veröffentlichungstag der Anmeldung: 20.04.2005
(62) Teilanmeldung aus: 03795720.6
(73) Patentinhaber: Kreyenborg Verwaltungen und Beteiligungen GmbH & Co. KG, D-48157 Münster (DE)
(72) Erfinder: Middler, Robert, 48329 Havixbeck (DE); Wöstmann, Stefan, 48336 Füchtorf (DE)
(74) Vertreter: Habbel, Ludwig

(56) Entgegenhaltungen:
- EP-A- 0 707 878
- DE-C- 3 527 173
- US-A- 5 578 206

## Beschreibung

Die Erfindung bezieht sich auf eine Vorrichtung zum Filtrieren eines Fluids, insbesondere eines verflüssigten Kunststoffes gemäß dem Oberbegriff des Anspruches 1.

Im nachfolgenden wird der Begriff "Siebträger" in Verbindung mit dem Begriff "Siebe" bzw. "Filterelement" benutzt, wobei darauf hinzuweisen ist, daß der Begriff "Sieb" bzw. "Filterelement" auch die verschiedenartigsten Siebe, Filter und andere Rückhalteeinrichtungen für Verschmutzungen betrifft.

Einrichtungen sind im Stand der Technik beispielsweise aus der DE 195 19 907 C2 bzw. der EP 0 798 098 B1 bekannt.

In der DE 35 27 173 C1 ist in Fig. 3 eine sogenannte Siebwechselstellung dargestellt, d. h. der eigentliche Siebträger ist aus dem Gehäuse so weit ausgefahren, daß das Sieb aus dem Siebraum entnommen und durch ein neues Sieb ersetzt werden kann. In dieser sogenannten Siebwechselstellung arbeitet das zweite in dem Siebträger untergebrachte Sieb weiterhin, stellt also eine Verbindung zwischen dem Zufuhrkanal und dem Abfuhrkanal her. Beim Ausfahren des Siebträgers aus dem Gehäuse so weit, daß die Siebwechselstellung erreichbar ist, tritt eine Zwischenstellung ein, in der weder das auszuwechselnde Sieb eine Verbindung mit dem Zufuhr- und dem Abfuhrkanal herstellt, noch das im Siebträger verbleibende Sieb, so daß also für einen mehr oder weniger großen Zeitraum die Produktion über beide Filterelemente unterbrochen ist. Durch diese Gestaltung des Siebträgers mit seinen Sieben wird eine kurzzeitige Schwankung im Prozeßdruck bedingt, die sich nachteilig für die Regelparameter der nachfolgenden Aggregate auswirkt.

Sind die Anlagen sehr klein ausgebildet, kann ein relativ schnelles Verschieben des Siebträgers erfolgen, d. h. die Schwankung im Prozeßdruck ist wirklich nur kurzzeitig. Sind die Anlagen sehr groß, wird für das Verschieben des Siebträgers lange Zeit benötigt, da ein langer Weg und hohe Gewichte zu bewältigen sind und damit wird eine relativ lange Schwankung im Prozeßdruck bedingt, der dann für die nachfolgenden Aggregate besonders nachteilig ist.

Aus der US-A-5 578 206 ist eine Einrichtung gemäß dem Oberbegriff des geltenden Hauptanspruches bekanntgeworden. Das Aufrechterhalten des Durchflusses des verflüssigten Kunststoffes vom Zufuhrkanal zum Abfuhrkanal auch bei Durchführen eines Siebwechsels wird bei dieser bekannten Einrichtung dadurch erreicht, daß sich der Abfuhrkanal siebträgerseitig zu einem großen, im Normalbetrieb beide Austrittskanäle der Reinsiebseite im Siebträger überdeckenden Kanal ausgebildet ist. Weiterhin muß der Zufuhrkanal eine große Breite aufweisen, um im Normalbetrieb beide Siebräume mit verflüssigtem Kunststoff beschicken zu können und trotzdem beim Auswechseln eines Siebes, also in der Siebwechselstellung, noch eine Verbindung mit dem verbleibenden Siebraum herzustellen.

Der Erfindung liegt die Aufgabe zugrunde, ausgehend vom gattungsbildenden Stand der Technik, eine Anlage zu schaffen, bei der größtmögliche Sieboberflächen bei guten Strömungsverhältnissen und bei kleinstmöglichen Siebträgerdurchmessern und damit möglichst kleinen Siebwechselgehäusen zu schaffen.

Diese der Erfindung zugrundeliegende Aufgabe wird durch die Lehre des Anspruches 1 gelöst.

Mit anderen Worten ausgedrückt wird vorgeschlagen, daß einerseits der Zufuhrkanal sich im Gehäuse in je zwei Zufuhrteilkanäle aufteilt, die zu den Filterelementen führen. Die Siebräume verjüngen sich in Längsachse des Siebträgers gesehen jeweils zu einem langgestreckt ausgebildeten Austrittskanal und schließlich ist der Abfuhrkanal siebträgerseitig in Längsachse des Siebträgers gesehen in Abfuhrteilkanäle unterteilt.

Durch die Zusammenfassung dieser Merkmale wird eine strömungstechnisch fortschrittlich ausgebildete Vorrichtung zum Filtrieren geschaffen.

Vorteilhafte Weiterbildungen der Einrichtung gemäß dem Hauptanspruch sind in den Unteransprüchen erläutert.

Grundsätzlich ist darauf hinzuweisen, daß es durchaus möglich ist, sowohl den Austrittskanal wie auch den Abfuhrkanal durch einzelne, reihenartig angeordnete Bohrungen auszubilden und daß es durchaus ebenfalls im Rahmen der Erfindung liegt, auch den Zufuhrkanal in einem an das Gehäuse anschließbaren Anbauteil auszuarbeiten.

Auch bei dieser Anordnung ist es möglich, Rückspülkanäle vorzusehen, so daß auch bei dieser Ausführungsform der oder die Siebträger in die sogenannte Rückspülstellung geführt werden können, in der dann das rückgespülte Fluid nach außen hin abgegeben wird.

Ein Ausführungsbeispiel der erfindungsgemäßen Einrichtung wird nachfolgend anhand der Zeichnungen erläutert. Die Zeichnungen zeigen dabei in
- Fig. 1: die sogenannte Produktionsstellung einer Ausführungsform, in
- Fig. 2: eine ausgewählte Zwischenstellung beim Verfahren des Siebträgers gemäß Fig. 1 mit Rückspülmöglichkeit, in
- Fig. 3: den Siebwechsel eines Siebes bei der Ausführungsform gemäß Fig. 1, in
- Fig. 4: den Siebwechsel des anderen Siebes bei der Ausführungsform gemäß Fig. 1 und in
- Fig. 5: eine Anordnung, bei der zwei Siebträger mit je zwei Sieben übereinander oder nebeneinander angeordnet sind.

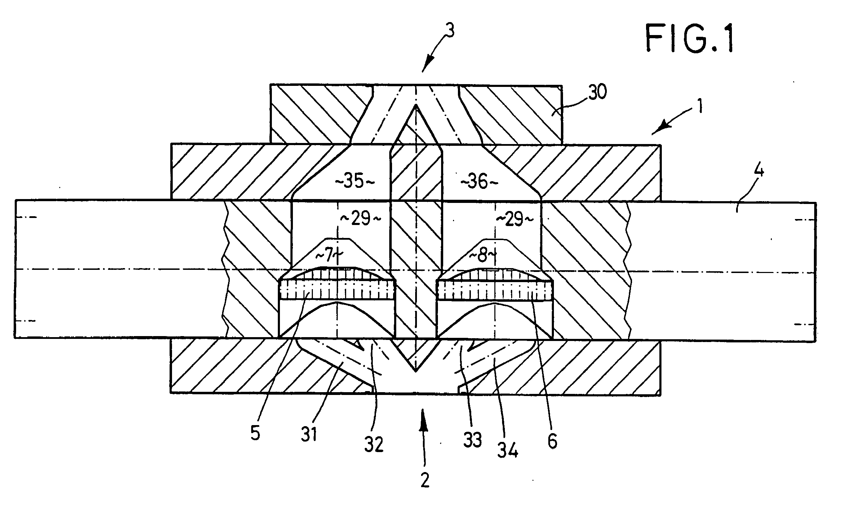

In Fig. 1 ist ein Gehäuse 1 dargestellt, in dem ein Siebträger 4 verschieblich gelagert ist. Das Gehäuse 1 weist einen Zufuhrkanal 2 und einen Abfuhrkanal 3 auf, wobei dem Zufuhrkanal 2 ein Fluid, vorzugsweise verflüssigter Kunststoff, zugeführt wird, wobei dieses Fluid mit Verunreinigungen versehen sein kann, die durch in Siebräumen 7, 8 untergebrachte Filterelemente, die nachfolgend als Siebe 5 und 6 bezeichnet werden, zurückgehalten werden, so daß auf der Reinsiebseite über je einen Austrittskanal 29 gereinigtes Fluid dem Abfuhrkanal 3 zugeführt werden kann. Wie dies die Fig. 1 bis 4 zeigen, schließt der Abfuhrkanal 3 an die Mündungen der Austrittskanäle 29 über Abfuhrteilkanäle 35 und 36 an. An die Austrittsöffnungen des Abfuhrkanales 3 schließen sich nachfolgende Arbeitsaggregate an, wie beispielsweise Strangpressen, Spritzgießmaschinen, Granulatoren od. dgl. Die Mündung des Abfuhrkanales 3 kann dabei in einer Anschlußplatte 30 ausgearbeitet sein.

Der Zufuhrkanal 2 teilt sich von seinem Eingang aus gesehen zum jeweiligen Siebraum 7, 8 in jeweils zwei Zufuhrteilkanäle 31, 32 bzw. 33, 34 auf.

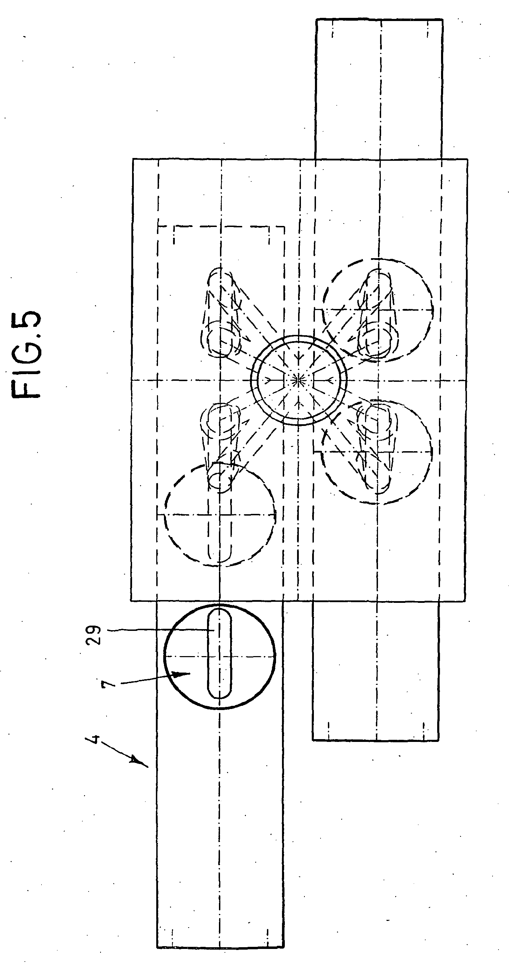

Insbesondere die Darstellung in Fig. 5, bei der aus einem Siebträger 4 das Sieb 5 entnommen ist, zeigt für den Siebraum 7, daß sich jeder Siebraum zu einem ovalen Austrittskanal 29 verjüngt, wobei die Längsachse dieses Ovals sich in Längsachse des Siebträgers 4 erstreckt und somit langgestreckt ausgebildet ist.

Fig. 1 läßt erkennen, daß auch die Abfuhrteilkanäle 35, 36 des Abfuhrkanales 3 siebträgerseitig in Längsachse des Siebträgers 4 gesehen langgestreckt ausgebildet sind. Der Abfuhrkanal 3 verjüngt sich aber dann zu seinem freien Ende hin kreisförmig, so daß wie im Stand der Technik kreisförmig ausgebildete Anschlußleitungen für die nachfolgenden Aggregate angeschlossen werden können.

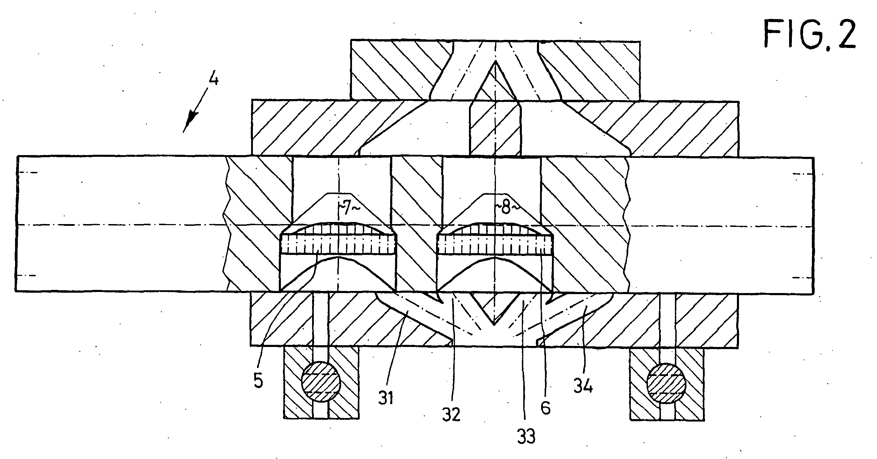

Bei der Darstellung in Fig. 2 ist erkennbar, daß der Siebträger 4 nach links verschoben ist, um das Sieb 5 dem Siebwechsel zuzuführen. Die Darstellung in Fig. 2 zeigt auch, daß in dieser Zwischenstellung sowohl der Siebraum 7 wie auch der Siebraum 8 noch mit dem Zufuhrkanal 2 verbunden sind, und zwar über die Zufuhrteilkanäle 31, 32 und 33, während der Zufuhrteilkanal 34 durch den eigentlichen Siebträger 4 abgeschlossen ist.

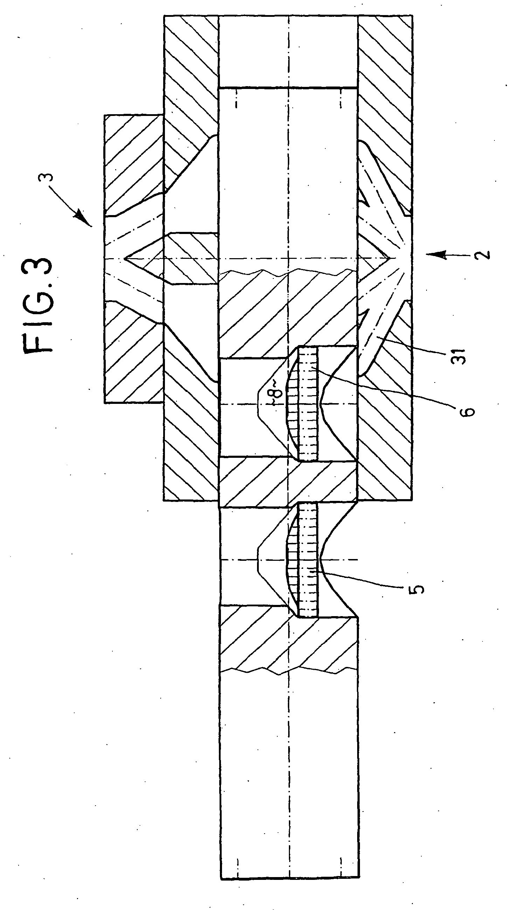

Auch bei einem weiteren Verschieben des Siebträgers 4 in die in Fig. 3 dargestellte Stellung - also nach links - verbleibt immer noch das Sieb 6 mit dem Siebraum 8 mit dem Zufuhrkanal 2 über den Zufuhrteilkanal 31 in Verbindung, so daß auch weiterhin gereinigtes Fluid dem Abfuhrkanal 3 zugeführt wird.

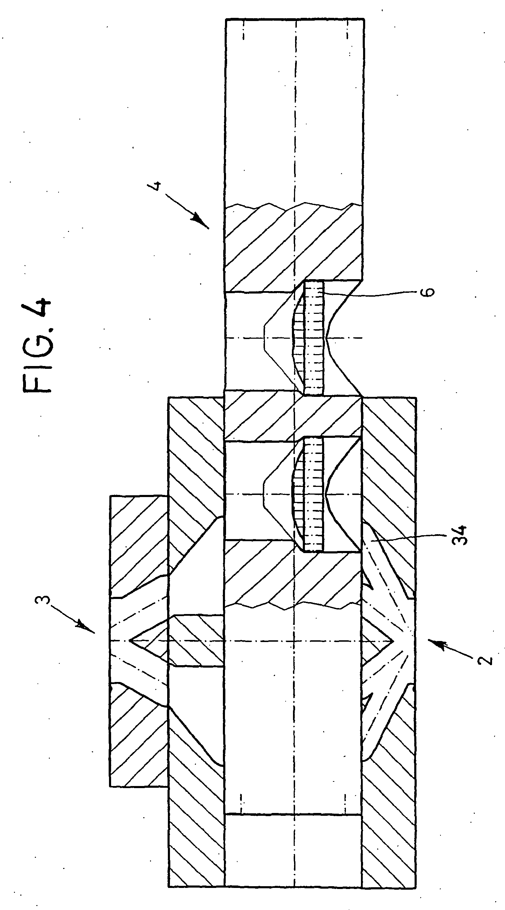

Die Fig. 3 und Fig. 4 zeigen die Stellung für den Siebwechsel des Siebes 5 bzw. 6, und auch hier ist erkennbar, daß nunmehr der Zufuhrkanal 2 über den Zufuhrteilkanal 31 bzw. 34 mit dem Abfuhrkanal 3 in Verbindung steht.

Durch diese Anordnung wird erreicht, daß keine kurzzeitigen Schwankungen im Prozeßdruck auftreten, die sich nachteilig für die Regelparameter der nachfolgenden Verarbeitungsaggregate auswirken könnte.

Bei sehr großen Anlagen ist für das Verschieben des Siebträgers 4 natürlich eine große, leistungsfähige Hydraulikanlage erforderlich und trotzdem ist bei großen Anlagen die Verschiebezeit für den Siebträger relativ lang, wobei durch die erfindungsgemäße Anordnung, insbesondere bei großen Anlagen erreicht wird, daß nunmehr auch bei einem relativ langsamen Verschieben des Siebträgers 4 stets eine Verbindung zwischen dem Zufuhrkanal 2 und dem Abfuhrkanal 3 aufrechterhalten bleibt.

In Fig. 2 ist als Beispiel eine Rückspülmöglichkeit dargestellt, und zwar mit Rückspülkanälen, die durch Absperreinrichtungen zu öffnen und zu schließen sind.

Als besonders wesentlich für die Rückspülung ist hervorzuheben, daß - bevor der Rückspülvorgang beginnt - das rückzuspülende Sieb auf der Rückseite mit erheblichem Druck beaufschlagt werden kann, so daß dadurch der Rückspülvorgang wesentlich erleichtert, beschleunigt und verbessert wird. Gleichzeitig werden geringe Verschiebewege erreicht, was ebenfalls für den Energieaufwand erheblich ist.

### Bezugszeichenliste

- 1: Gehäuse
- 2: Zufuhrkanal
- 3: Abfuhrkanal
- 4: Siebträger
- 5: Sieb
- 6: Sieb
- 7: Siebraum
- 8: Siebraum
- 29: Austrittskanal
- 30: Anbauteil
- 31: Zuführteilkanal
- 32: Zuführteilkanal
- 33: Zuführteilkanal
- 34: Zuführteilkanal

## Patentansprüche

1. Vorrichtung zum Filtrieren eines Fluids, insbesondere eines verflüssigten Kunststoffes mit einem Gehäuse (1), mit einem Zufuhrkanal (2), einem Abfuhrkanal (3), wobei im Strömungsweg des Fluids in einem quer zur Strömungsrichtung verschieblich gelagerten Siebträger (4) mindestens zwei Filterelemente (5, 6) in entsprechenden Siebräumen (7, 8) angeordnet und mit dem Zufuhrkanal (2) und dem Abfuhrkanal (3) in Verbindung bringbar sind, wobei jeder Siebraum auf der Reinsiebseite einen im Siebträger (4) ausgearbeiteten Austrittskanal (29) aufweist, der vom Siebraum (7, 8) zum Abfuhrkanal (3) hin gerichtet ist und die in dem Siebträger (4) ausgebildeten Siebräume (7, 8) so nahe in Verschieberichtung des Siebträgers (4) hintereinander liegen, daß bei Ausschieben eines Filterelementes (5 oder 6) aus dem Gehäuse (1) zwecks Siebwechsel stets eine Verbindung zwischen Zufuhrkanal (2) und Abfuhrkanal (3) unter Zwischenschaltung eines Filterelementes (5 oder 6) aufrechterhalten bleibt, **dadurch gekennzeichnet, daß**
a) der Zufuhrkanal (2) sich im Gehäuse (1) in je zwei Zufuhrteilkanäle (31, 32) bzw. (33, 34) aufteilt, die zu den Filterelementen (5, 6) führen,
b) jeder Siebraum (7, 8) in Längsachse des Siebträgers (4) gesehen sich zu einem langgestreckt ausgebildeten Austrittskanal (29) verjüngt,
c) der Abfuhrkanal (3) siebträgerseitig in Längsachse des Siebträgers (4) gesehen langgestreckt ausgebildete Abfuhrteilkanäle (35, 36) schafft und sich zu seinem freien Ende hin kreisförmig verjüngt.

2. Vorrichtung nach Anspruch 1, **dadurch gekennzeichnet, daß** der Abfuhrkanal (3) in einem an das Gehäuse (1) anschließbaren Anbauteil (30) ausgearbeitet ist.

3. Vorrichtung nach Anspruch 1, **dadurch gekennzeichnet, daß** der Austrittskanal (29) als einzelne, reihenartig angeordnete Bohrungen ausgebildet sind.

4. Vorrichtung nach Anspruch 1, **dadurch gekennzeichnet, daß** die Abfuhrteilkanäle (35, 36) als einzelne, reihenartig angeordnete Ausnehmungen ausgebildet sind.

5. Vorrichtung nach Anspruch 1, **dadurch gekennzeichnet, daß** der Zufuhrkanal (2) in einem an das Gehäuse (1) anschließbaren Anbauteil ausgearbeitet ist.

6. Vorrichtung nach einem der Ansprüche 1 bis 5, **dadurch gekennzeichnet, daß** Rückspülkanäle und Absperreinrichtungen für diese vorgesehen sind.

## Claims

1. Device for filtering a fluid, in particular a liquefied plastic, with a housing (1), an infeed duct (2) and an outfeed duct (3), where at least two filter elements (5, 6) in appropriate filter compartments (7, 8) in a movably mounted filter carrier (4), are located in the flow path of the fluid at right angles to the direction of flow, and can be brought into contact with the infeed duct (2) and the outfeed duct (3), where each of the filter compartments has an outlet duct (29) machined in the filter carrier (4) at the clean side of the filter, which is aligned towards the outfeed duct (3), and the filter compartments (7, 8) machined in the filter carrier (4) are located behind one another so closely in the direction of movement of the filter carrier (4), that when one filter element (5 or 6) is pushed out of the housing (1) for replacement, a connection between the infeed duct (2) and the outfeed duct (3) is maintained with one filter element (5 or 6) between the ducts, **characterised in that**
a) in the housing (1) the infeed duct (2) divides into two infeed-duct sections (31, 32) and (33, 34) leading to the filter elements (5, 6),
b) each of the filter compartments (7, 8) tapers to form an extended outlet duct (29) looking along the lengthwise axis of the filter carrier (4),
c) the outfeed duct (3) forms extended outfeed-duct sections (35, 36) on the side of the filter carrier looking along the lengthwise axis of the filter carrier (4), and tapers in circular shape towards its free end.

2. Device according to claim 1, **characterised in that** the outfeed duct (3) is machined in a component (30) which can be connected to the housing (1).

3. Device according to claim 1, **characterised in that** the outlet duct (29) is formed as individual bores arranged in a row.

4. Device according to claim 1, **characterised in that** the outfeed-duct sections (35, 36) are formed as individual recesses arranged in a row.

5. Device according to claim 1, **characterised in that** the infeed duct (2) is machined in a component which can be connected to the housing (1).

6. Device according to one of the claims 1 to 5, **characterised in that** reversible-flow ducts and shut-off devices are provided for these.

## Revendications

1. Dispositif de filtration de liquide, notamment pour des installations de transformation de matières plastiques liquéfiées, comprenant un carter (1), un conduit d'amenée (2), un conduit d'évacuation (3), sachant que sur l'itinéraire du flux du liquide, dans un support (4) de tamis reposant de sorte à pouvoir le déplacer transversalement au sens du flux, au moins deux éléments filtrants (5, 6) sont disposés dans des chambres de tamisage (7,8) correspondantes et peuvent être amenés en liaison avec le conduit d'amenée (2) et le conduit d'évacuation (3), sachant que chaque chambre de tamisage présente, du côté propre du tamis, un conduit de sortie (29) ménagé dans le support (4) de tamis par enlèvement de matière, ledit conduit de sortie étant orienté de la chambre de tamisage (7, 8) vers le conduit d'évacuation (3) et les chambres de tamisage (7, 8) formées dans le support (4) de tamis se trouvant à une proximité telle les unes derrière les autres dans le sens de déplacement du support (4) de tamis que lorsqu'on sort un élément filtrant (5 ou 6) du carter (1) pour changer de tamis, il demeure toujours une jonction entre le conduit d'amenée (2) et le conduit d'évacuation (3) avec intercalage d'un élément filtrant (5 ou 6), **caractérisé en ce que**
a) le conduit d'amenée (2) se divise, dans le carter (1), respectivement en deux conduits d'amenée partiels (31, 32) ou (33, 34) qui aboutissent aux éléments filtrants (5, 6),
b) chaque chambre de tamisage (7, 8), examinée selon l'axe longitudinal du support (4) de tamis, se rétrécit en un conduit de sortie (29) étiré en longueur,
c) le conduit d'évacuation (3), examiné côté support de tamis selon l'axe longitudinal du support (4) de tamis, crée des conduits partiels d'évacuation (35, 36) étirés en longueur et, en direction de son extrémité libre, se rétrécit en acquérant une géométrie circonférentielle.

2. Dispositif selon la revendication 1, **caractérisé en ce que** le conduit d'évacuation (3) a été ménagé par enlèvement de matière dans une pièce rapportée (30) raccordable contre le carter (1).

3. Dispositif selon la revendication 1, **caractérisé en ce que** le conduit de sortie (29) se présente sous forme d'alésages individuels agencés en rangs.

4. Dispositif selon la revendication 1, **caractérisé en ce que** les conduits partiels d'évacuation (35, 36) sont configurés en forme d'évidements individuels agencés en rangs.

5. Dispositif selon la revendication 1, **caractérisé en ce que** le conduit d'amenée (2) a été ménagé par enlèvement de matière dans une pièce rapportée raccordable au carter (1).

6. Dispositif selon l'une des revendications 1 à 5, **caractérisé en ce qu'**ont été prévus des canaux de rinçage en sens inverse et des dispositifs de fermeture affectés à ces derniers.
